# EUROPEAN PATENT APPLICATION

(11) **EP 4 835 850 A1**
(43) Date of publication of application: **04.11.2026**
(21) Application number: 26168090.4
(22) Date of filing: 26.03.2026
(51) Int. Cl.: G07C 9/00, G07C 9/28, B60R 25/24

(54) **APPROACH-BASED LOCK CONTROL**

(30) Priority: 01.05.2025 US 202563798454 P; 25.02.2026 US 202619550141
(71) Applicant: Apple Inc., Cupertino, CA 95014 (US)
(72) Inventor: ROSEN, Zachary A., Cupertino, 95014 (US)
(74) Representative: Zacco Denmark A/S

(57) **Abstract**

The subject disclosure provides systems and methods for approach-based lock control. Approach-based lock control may allow touchless wireless control of a lock device while avoiding or preventing unintentional unlocks. This may be achieved by unlocking the lock device only when an authorized device is approaching along one or more predetermined unlock approach angles, and refraining from unlocking the lock device when an authorized device is approaching the lock device along other approach angles.

## Description

### TECHNICAL FIELD

The present description relates generally to electronic devices including, for example, approach-based lock control.

### BACKGROUND

Locks are typically provided at the doors of homes, vehicles, and businesses. Wireless key fobs are often used to unlock the locks when the fob is brought into close proximity to the lock.

### BRIEF DESCRIPTION OF THE DRAWINGS

Certain features of the subject technology are set forth in the appended claims. However, for purpose of explanation, several embodiments of the subject technology are set forth in the following figures.
FIG. 1 illustrates an example environment in accordance with one or more implementations.
FIG. 2 illustrates an example interaction between a portable electronic device and a lock device in accordance with one or more implementations.
FIG. 3A illustrates an example of a proximity-based unlock operation for a lock device in accordance with one or more implementations.
FIG. 3B illustrates an example of approach-based lock control in accordance with one or more implementations.
FIG. 4 illustrates a schematic top view of a structure with an entry portal having a lock device configured for approach-based lock control in accordance with one or more implementations.
FIGS. 5A-5E illustrate examples of approaches that may not result in an unlock operation by a lock device implementing approach-based lock control in accordance with one or more implementations.
FIG. 6 illustrates an example of an electronic device providing unlock approach angle information to a lock device based on a user input in accordance with one or more implementations.
FIG. 7 illustrates a flow diagram of an example process for approach-based lock control in accordance with one or more implementations.
FIG. 8 illustrates a flow diagram of an example process for user definition of unlock approach angles for approach-based lock control in accordance with one or more implementations.
FIG. 9 illustrates an example electronic system with which aspects of the subject technology may be implemented in accordance with one or more implementations.

### DETAILED DESCRIPTION

The detailed description set forth below is intended as a description of various configurations of the subject technology and is not intended to represent the only configurations in which the subject technology can be practiced. The appended drawings are incorporated herein and constitute a part of the detailed description. The detailed description includes specific details for the purpose of providing a thorough understanding of the subject technology. However, the subject technology is not limited to the specific details set forth herein and can be practiced using one or more other implementations. In one or more implementations, structures and components are shown in block diagram form in order to avoid obscuring the concepts of the subject technology.

Aspects of the subject technology provide systems, devices, and methods for approach-based lock control. For example, a lock device may provide automatic, touchless unlocking when a user carrying an authorized device approaches the lock device. Approach-based lock control, as disclosed herein, can help to avoid unintentional unlocks of a lock device that provides automatic, touchless unlocking when a user carrying an authorized device approaches the lock device.

In order, for example, to achieve avoiding unintentional unlocks, a lock mechanism may be unlocked only when an authorized device approaches at one or more predetermined approach angles, with at least a predetermined approach speed, with at least a threshold approach consistency, and/or along one or more predetermined approach paths. In this way, unintentional unlocks can be avoided, such as when the person with an authorized device is approaching the lock device but not intending to unlock the lock device, and/or when the person is walking around near the lock device, but not intentionally approaching the lock device. This can help to avoid, for example, unlocking a front door of a home when a person is carrying an authorized device and moving along a path toward the front door, but is already within the home.

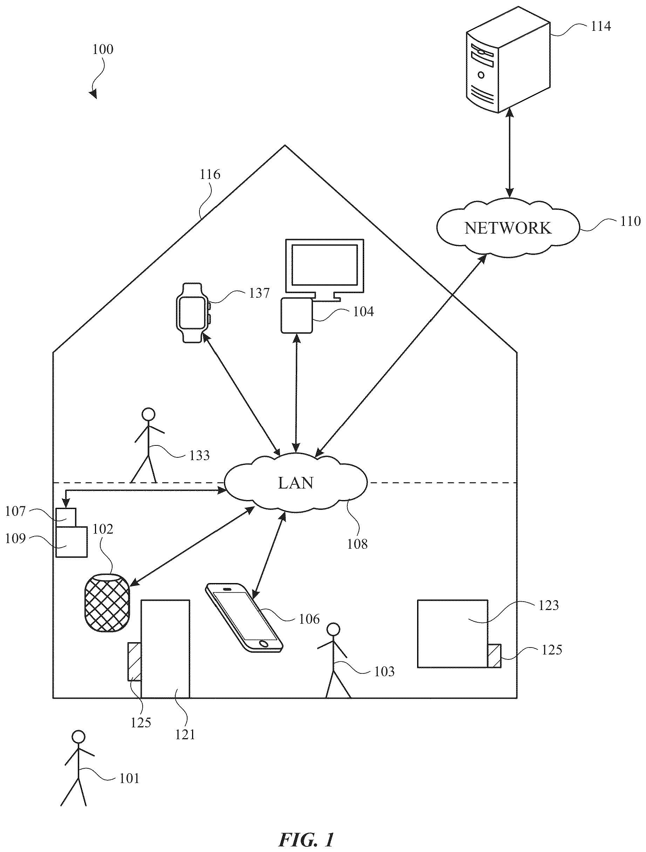

FIG. 1 illustrates an example physical environment 100 that includes various devices in accordance with one or more implementations. Not all of the depicted components may be used in all implementations, however, and one or more implementations may include additional or different components than those shown in the figure. Variations in the arrangement and type of the components may be made without departing from the spirit or scope of the claims as set forth herein. Additional components, different components, or fewer components may be provided.

The physical environment 100 may include a structure 116, which may be a house, a home, an office space, an office building, or any indoor or outdoor physical environment to which access is restricted using one or more lock devices. In the example of FIG. 1, the structure 116 is depicted as being a home of one or more users, such as a user 101, a user 103, and/or a user 133. In other implementations, the structure 116 may be implemented as a vehicle, or a gym, a swimming pool area, or other restricted physical structure. In other implementations, the structure 116 may be a smaller structure, such as a cabinet, a locker, a safe, or the like.

In the example of FIG. 1, the physical environment 100 may include and/or overlap with a network environment that includes electronic devices such as a smart speaker 102, a media player 104 (e.g., a set top box), a mobile device 106, one or more cameras 107, one or more hub devices 109, one or more lock devices 125, and/or one or more wearable devices 137 (e.g., a smart watch, a head mountable device, a pendant device, etc.). In various implementations, the mobile device 106 may be implemented as, for example, a portable computing device such as a laptop computer, a smartphone, a tablet device, a wearable device, or other portable device capable of being carried and/or worn by a user.

As shown in FIG. 1, the structure 116 may include one or more portals, such as an entry portal (e.g., a door 121 or a gate), and/or another portal (e.g., a window 123). As shown, one or more of the portals of the structure 116 may be provided with a lock device 125 that controls (e.g., by actuating between a locked configuration and an unlocked configuration) access to the structure 116 via the associated portal for that lock device 125. For example, the lock device 125 may implement one or more aspects of approach-based lock control, as described herein. In one or more implementations, the mobile device 106 and/or the wearable device 137 may be configured as authorized devices for unlocking one or more lock devices 125.

In one or more implementations, the lock device 125, the camera(s) 107, the smart speaker 102, the media player 104, the mobile device 106, the one or more hub devices 109, the one or more wearable devices 137, and/or other electronic devices and/or components in the physical environment 100 may be connected to a local area network ("LAN") 108, and/or may be connected (e.g., directly or via the LAN 108) to any of others of the lock device 125, the camera(s) 107, the smart speaker 102, the media player 104, the mobile device 106, the one or more hub devices 109, the one or more wearable devices 137, and/or other electronic devices and/or components. In one or more implementations, any or all of the devices of FIG. 1 may be connected (e.g., via the LAN 108), to a network 110, and/or one or more servers, such as server 114.

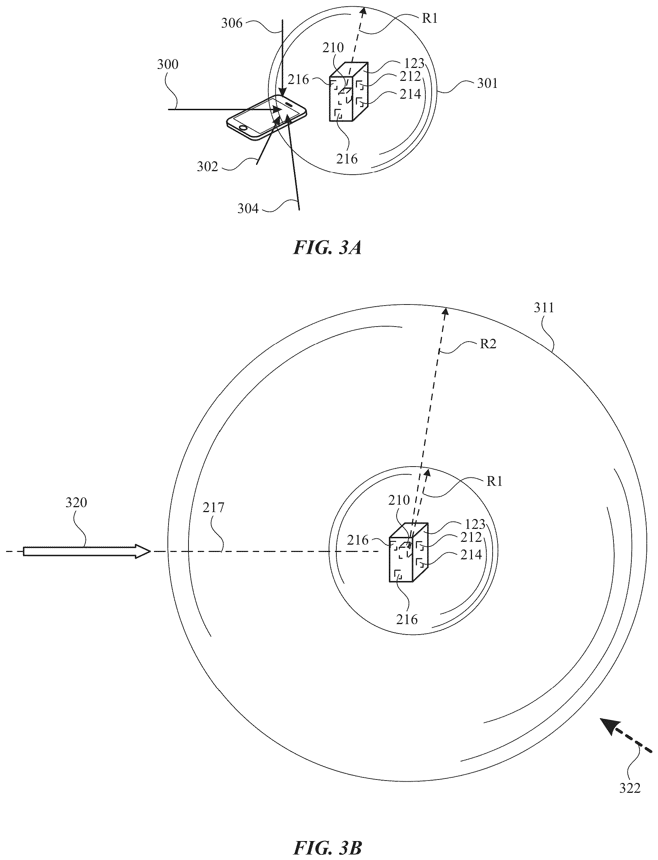

In one or more implementations, one, two, or more than two (e.g., all) of the lock device 125, the camera(s) 107, the smart speaker 102, the media player 104, the mobile device 106, the one or more hub devices 109, the one or more wearable devices 137, and/or other electronic devices and/or components may be associated with (e.g., registered to and/or signed into) a common account, such as an account (e.g., user account) with the server 114. As examples, the account may be an account of an individual user (e.g., an enrolled person, such as user 101, that has enrolled, as described herein in connection with FIG. 3, with the hub device 109 and/or the server 114 for participation in home control operations) or a group account (e.g., a family account or other group account for an enrolled person). In one or more implementations, the devices can be registered to different user accounts and the user accounts themselves may be grouped or otherwise associated with one another (e.g., user accounts of a family).

In one or more implementations, the lock device 125, the camera(s) 107, the smart speaker 102, the media player 104, the mobile device 106, the one or more hub devices 109, the one or more wearable devices 137, and/or other electronic devices and/or components may form part of a connected home environment, and the LAN 108 may communicatively (directly or indirectly) couple any two or more of the lock device 125, the camera(s) 107, the smart speaker 102, the media player 104, the mobile device 106, the one or more hub devices 109, the one or more wearable devices 137, and/or other electronic devices and/or components within the connected home environment.

The network 110 may communicatively (directly or indirectly) couple any two or more of the lock device 125, the camera(s) 107, the smart speaker 102, the media player 104, the mobile device 106, the one or more hub devices 109, the one or more wearable devices 137, and/or other electronic devices and/or components with the server 114, for example, in conjunction with the LAN 108. In one or more implementations, some pairs or groups of the electronic devices of FIG. 1 (e.g., the mobile device 106 and the lock device 125, the wearable device 137 and the lock device 125) may communicate directly over a secure direct connection in some scenarios, such as when the pairs or groups of the electronic devices are in proximity to and/or approaching each other.

Although the lock device 125, the camera(s) 107, the smart speaker 102, the media player 104, the mobile device 106, the one or more hub devices 109, the one or more wearable devices 137, and/or other electronic devices and/or components are depicted in FIG. 1 as forming a part of a connected home environment in which all of the devices are connected to the LAN 108, one or more of the lock device 125, the camera(s) 107, the smart speaker 102, the media player 104, the mobile device 106, the one or more hub devices 109, the one or more wearable devices 137, and/or other electronic devices and/or components may not be a part of the connected home environment and/or may not be connected to the LAN 108 at one or more times.

In one or more implementations, the LAN 108 may include one or more different network devices/network medium and/or may utilize one or more different wireless and/or wired network technologies, such as Ethernet, optical, Wi-Fi, Bluetooth, Zigbee, Powerline over Ethernet, coaxial, Ethernet, Z-Wave, cellular, or generally any wireless and/or wired network technology that may communicatively couple two or more devices.

In one or more implementations, the network 110 may be an interconnected network of devices that may include, and/or may be communicatively coupled to, the Internet. For explanatory purposes, the physical environment 100 is illustrated in FIG. 1 as including the lock device 125, the camera(s) 107, the smart speaker 102, the media player 104, the mobile device 106, the one or more hub devices 109, the one or more wearable devices 137, and/or other electronic devices and/or components, and the server 114; however, the physical environment 100 may include any number of electronic devices, cameras, accessories, and/or any number of servers.

In one or more implementations, one or more of the lock device 125, the camera(s) 107, the smart speaker 102, the media player 104, the mobile device 106, the one or more hub devices 109, the one or more wearable devices 137, and/or other electronic devices and/or components may provide a system for training a machine learning model using training data, where the trained machine learning model is subsequently deployed to that electronic device and/or other ones of the lock device 125, the camera(s) 107, the smart speaker 102, the media player 104, the mobile device 106, the one or more hub devices 109, the one or more wearable devices 137, and/or other electronic devices and/or components.

Further, the mobile device 106, the wearable device 137, and/or the lock device 125 may provide one or more machine learning frameworks for training machine learning models and/or developing applications using such machine learning models. In an example, such machine learning frameworks can provide various machine learning algorithms and models for different problem domains in machine learning. In an example, one or more of the lock device 125, the camera(s) 107, the smart speaker 102, the media player 104, the mobile device 106, the one or more hub devices 109, the one or more wearable devices 137, and/or other electronic devices and/or components may include a deployed machine learning model that provides an output of data and/or a control of an actuatable mechanism corresponding to a prediction or transformation or some other type of machine learning input or output.

In one or more implementations, the server 114 may be configured to perform operations in association with user accounts such as: storing data (e.g., user settings/preferences, unlock approach angles, files such as documents and/or photos, etc.) with respect to user accounts, sharing and/or sending data with other users with respect to user accounts, backing up device data with respect to user accounts, and/or associating devices and/or groups of devices with user accounts.

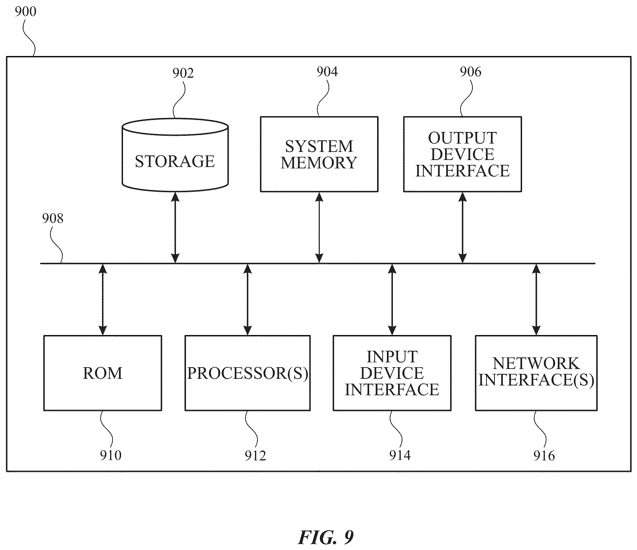

One or more of the servers such as the server 114 may be, and/or may include all or part of the device discussed below with respect to FIG. 9. For explanatory purposes, a single server 114 is shown and discussed herein. However, one or more servers may be provided, and each different operation may be performed by the same or different servers.

In some examples, one or more people may be authorized to access the structure 116, such as by being provided with an electronic key to one or more of the lock devices 125. The electronic key may be implemented in a key fob or in a device that performs other functions, such as the mobile device 106 or the wearable device 137. For example, a key fob, the mobile device 106, and/or the wearable device 137 may include circuitry configured for wireless communication with communication circuitry of a lock device 125, such as to exchange information associated with the electronic key for unlocking of the lock device 125. In some examples described herein, the mobile device 106 is used as an electronic key to unlock the lock device 125. However, this is merely illustrative, and other devices, such as the wearable device 137, or a dedicated key fob device may be used.

For example, a person, such as a user 101 may bring the mobile device 106 into proximity of the lock device 125 to trigger the lock device 125 to obtain electronic key information from the mobile device 106. Based on the electronic key information, the lock device 125 may unlock to allow the user 101 to open the door and enter or otherwise access the interior of the structure 116. However, it can be inconvenient and/or inefficient for the user 101 to obtain the mobile device 106 (e.g., from a pocket, a purse, a bag, or a backpack) and physically move the mobile device 106 into proximity of the lock device 125. Accordingly, it may be desirable to expand the range (e.g., expand a virtual bubble) around the lock device 125 within which the electronic key information can be obtained from the mobile device 106 and the lock device 125 can be unlocked. For example, an expanded unlock range may allow the user 101 to simply walk up to the door 121 and open the door that has already been proactively unlocked by the lock device 125 when the mobile device (e.g., even in the user's pocket or backpack) enters the expanded range of the lock device 125.

However, expanding the range of the lock device 125 in this way can lead to undesirable and/or unintentional unlocking of the lock device 125. For example, the lock device 125 may be unintentionally unlocked when a user (e.g., a user 103 or user 133) is already within the structure 116 and happens to walk past the door 121 while carrying a device configured as an electronic key for the lock device 125. As another example, the user 101 may be carrying the mobile device 106 outside the door 121 and wandering around while on a call, or while watering plants or doing outdoor maintenance while the mobile device 106 is in the user's pocket. In these example use cases, the user 101 may desire for the door 121 to remain locked, even at times when the user 101 is nearby and/or temporarily moving in the direction of the lock device 125.

Aspects of the subject technology may help to provide efficient, convenient unlocking of a lock device 125 (e.g., and thereby an associated entry portal for which the lock device 125 controls access) before the user of the lock device 125 touches the portal or the lock device, and while avoiding or preventing unintentional unlocks of the lock device 125. For example, this may be achieved by performing (e.g., by the lock device 125 and/or a device, such as the mobile device 106 or the wearable device 137, having an electronic key) approach-based unlock operations.

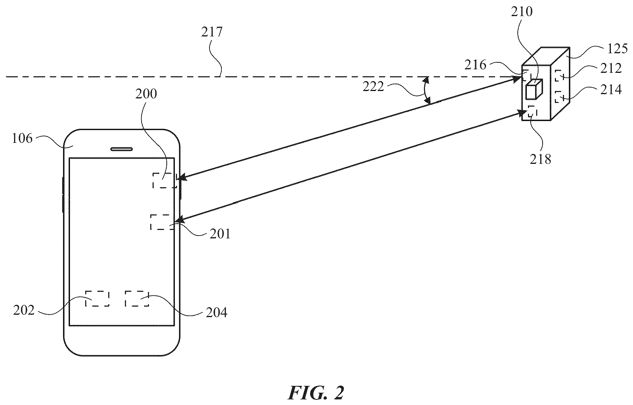

For example, FIG. 2 illustrates the mobile device 106 in communication with a lock device 125 that is configured for approach-based unlock operations in accordance with one or more implementations. Not all of the depicted components may be used in all implementations, however, and one or more implementations may include additional or different components than those shown in the figure. Variations in the arrangement and type of the components may be made without departing from the spirit or scope of the claims as set forth herein. Additional components, different components, or fewer components may be provided.

As illustrated in FIG. 2, the lock device 125 may have an actuatable mechanism 210, such as a locking mechanism. For example, the locking mechanism may be implemented as an actuatable bolt that extends from the lock device (e.g., into a receptacle in a door frame or a window frame) in a locked configuration, and retracts into the lock device 125 in an unlocked position. As another example, the locking mechanism may be implemented as an actuatable engagement mechanism that causes a handle of a portal to engage with an opening mechanism (e.g., a latch bolt) of the portal in an engaged or unlocked configuration, and disengages the handle of the portal from the opening mechanism in a disengaged or locked configuration (e.g., so that user actuation of the handle does not open the portal, when the actuatable mechanism is in the disengaged or locked configuration).

In one or more implementations, the lock device 125 may include a processor 212, a memory 214, sensor circuitry 216, and/or communication circuitry 218. The processor 212 may include suitable logic, circuitry, and/or code that enables processing data and/or controlling operations of the lock device 125. In this regard, the processor 212 may be enabled to provide control signals to various other components of the lock device 125. The processor 212 may also control transfers of data between various portions of the lock device 125. Additionally, the processor 212 may enable implementation of an operating system or otherwise execute code to manage operations of the lock device 125.

The memory 214 may include suitable logic, circuitry, and/or code that enable storage of various types of information such as received data, generated data, code, and/or configuration information. The memory 214 may include, for example, random access memory (RAM), read-only memory (ROM), flash, and/or magnetic storage.

In one or more implementations, the memory 214 may store one or more predetermined unlock approach angles that define one or more respective angles of approach of the mobile device 106 (e.g., and/or other authorized devices having an electronic key for the lock device 125, such as the wearable device 137) that result in unlocking of the lock device 125. In one or more implementations, the memory 214 may store instructions for executing one or more rules-based processes for controlling the actuatable mechanism 210 based on approach information (e.g., from sensor circuitry 216) and/or other information for the mobile device 106. In one or more implementations, the memory 214 may store one or more trained machine learning models that have been trained to determine a user intent to unlock the lock device 125 based on approach information and/or other information.

As examples, other information that may be used to determine a user's intent to unlock the lock device 125 may include confirmatory images (e.g., obtained by a camera of the lock device 125 and/or one or more other cameras, such as one or more cameras 107) of a user's hand reaching out for a handle of a portal (e.g., the door 121 of FIG. 1), learned and/or user-provided schedule information and/or behavioral information, such as common arrival times of the user and/or user movements that are typically associated with the user unlocking the lock device 125, and/or other user activity information (e.g., large language model (LLM) processing of user speech in the vicinity of the lock device 125, such as the user speaking "I'm heading into the house now", indicating an intention to unlock the lock device 125, or "I'm just watering plants outside the front door", indicating a lack of user intent to unlock the lock device 125). The memory 214 may also store information associated with one or more user accounts and/or electronic keys that are authorized to unlock the lock device 125.

The sensor(s) (e.g., sensor circuitry 216) of the lock device 125 may include one or more sensors that are capable of identifying the presence of the mobile device 106, identifying the distance of the mobile device 106 from the lock device 125, identifying an angle of approach of the lock device 125, identifying an approach speed of the mobile device 106 (e.g., by tracking the distance over time), and/or identifying an approach path of the mobile device 106. For example, the sensor circuitry 216 may include ultra-wideband (UWB) circuitry. For example, UWB circuitry at the lock device 125 may use UWB signals provided to the lock device by sensor circuitry 200 of the mobile device 106 to determine a time-of-flight of the UWB signals from the mobile device 106, and to thereby determine the distance to the mobile device 106 (e.g., using the time-of-flight and the known speed of light). In this example, the UWB circuitry may include multiple antennas that may be used to determine an approach angle 222 of the mobile device 106 toward the lock device 125. For example, because multiple antennas of UWB circuitry may be spatially separated from each other, the phases of UWB signals received from the sensor circuitry 200 of the mobile device 106 at each of the multiple antennas may be different (e.g., due to different path lengths between the mobile device 106 and the multiple receiving antennas at the lock device 125). These phases differences, and the known spatial separations of the multiple antennas, may be used to determine (e.g., triangulate) the approach angle 222 of the mobile device 106.

For example, the approach angle 222 may be determined relative to a reference angle, such as a face-on approach angle 217. For example, the face-on approach angle 217 may be defined by a line extending outward in front of the lock device 125 in a direction orthogonal to an outer surface of the lock device 125. The approach angle 222 may be determined in two dimensions (e.g., relative to the reference angle in a plane parallel to the ground, or a horizontal floor, beneath the lock device 125), or in three dimensions. The example of using UWB circuitry to determine the approach angle is merely illustrative, and other technologies (e.g., Bluetooth communications, lidar or other ranging circuitry, cameras, and/or the like) may be used to determine the approach angle 222 in various implementations. For example, determining the approach path can be facilitated in some implementations (or may be "confirmed") by an external device such as a camera that has a view of the portal and that is in (e.g., wireless) communication with the lock device 125. As discussed in further detail hereinafter, the lock device 125 (e.g., the processor of the lock device) may determine whether to unlock the lock device 125 (e.g., by actuating the actuatable mechanism 210 into an unlocked configuration) based at least in part on the approach angle 222.

The communication circuitry 218 of the lock device 125 may include a communication interface, which may include suitable logic, circuitry, and/or code that enables wireless communication with a corresponding communication interface (e.g., communication circuitry 201) of the mobile device 106. The communication interface may include, for example, one or more of a Bluetooth communication interface, a cellular interface, an NFC interface, a Zigbee communication interface, a WLAN communication interface, a USB communication interface, or generally any communication interface. The communication circuitry 218 may be used to wirelessly obtain electronic key information securely from the mobile device 106 (e.g., from communication circuitry 201 of the mobile device 106). The processor 212 of the lock device 125 may process the electronic key information before, during, and/or after the approach angle determination using the sensor(s) (e.g., sensor circuitry 216), to determine whether the mobile device 106 is authorized to unlock the lock device 125. As discussed herein, in use cases in which the mobile device 106 is authorized to unlock the lock device 125, the unlocking may be conditioned on one or more aspects of the approach (e.g., the approach angle, the approach speed, the approach path, and/or the approach consistency) of the mobile device 106 toward the lock device 125.

In one or more implementations, one or more of the processor 212, processing portions of the sensor circuitry 216 and/or the communication circuitry 218, and/or one or more portions thereof, may be implemented in software (e.g., subroutines and code), may be implemented in hardware (e.g., an Application Specific Integrated Circuit (ASIC), a Field Programmable Gate Array (FPGA), a Programmable Logic Device (PLD), a controller, a state machine, gated logic, discrete hardware components, or any other suitable devices) and/or a combination of both.

As shown, the mobile device 106 may include a processor 202, a memory 204, a sensor circuitry 200, and communication circuitry 201. The processor 202 may include suitable logic, circuitry, and/or code that enables processing data and/or controlling operations of the mobile device 106. In this regard, the processor 202 may be enabled to provide control signals to various other components of the mobile device 106. The processor 202 may also control transfers of data between various portions of the mobile device 106. Additionally, the processor 202 may enable implementation of an operating system or otherwise execute code to manage operations of the mobile device 106.

The memory 204 may include suitable logic, circuitry, and/or code that enable storage of various types of information such as received data, generated data, code, and/or configuration information. The memory 204 may include, for example, random access memory (RAM), read-only memory (ROM), flash, and/or magnetic storage.

In one or more implementations, the memory 204 may store instructions for providing a user interface for user identification of one or unlock approach angles. The memory 204 may store electronic key information for one or more lock devices 125. The memory 204 may store instructions for operating sensor circuitry 200 to communicate with the sensor circuitry 216 of the lock device 125 and/or operating the communication circuitry 201 to communicate with the communication circuitry 218 of the lock device 125.

The sensor circuitry 200 may include circuitry, such as UWB circuitry, that is capable communicating with the sensor circuitry 216 of the lock device 125. Sensor circuitry 200 may include circuitry that is based on other technologies (e.g., Bluetooth communications, lidar or other ranging circuitry, cameras, and/or the like) may be used to determine the approach angle 222 in various implementations.

The communication circuitry 201 may include a communication interface, which may include suitable logic, circuitry, and/or code that enables wireless communication with a corresponding communication circuitry 218 of the lock device 125. The communication interface may include, for example, one or more of a Bluetooth communication interface, a cellular interface, an NFC interface, a Zigbee communication interface, a WLAN communication interface, a USB communication interface, or generally any communication interface. The communication circuitry 201 may be used to wirelessly provide electronic key information securely from the mobile device 106 to the lock device (e.g., to the communication circuitry 218 of the mobile device 106), and/or to communication one or more unlock approach angles to the lock device 125.

In one or more implementations, one or more of the processor 202, processing portions of the sensor circuitry 200 and/or the communication circuitry 201, and/or one or more portions thereof, may be implemented in software (e.g., subroutines and code), may be implemented in hardware (e.g., an Application Specific Integrated Circuit (ASIC), a Field Programmable Gate Array (FPGA), a Programmable Logic Device (PLD), a controller, a state machine, gated logic, discrete hardware components, antennas, radio front end circuitry or any other suitable devices) and/or a combination of both.

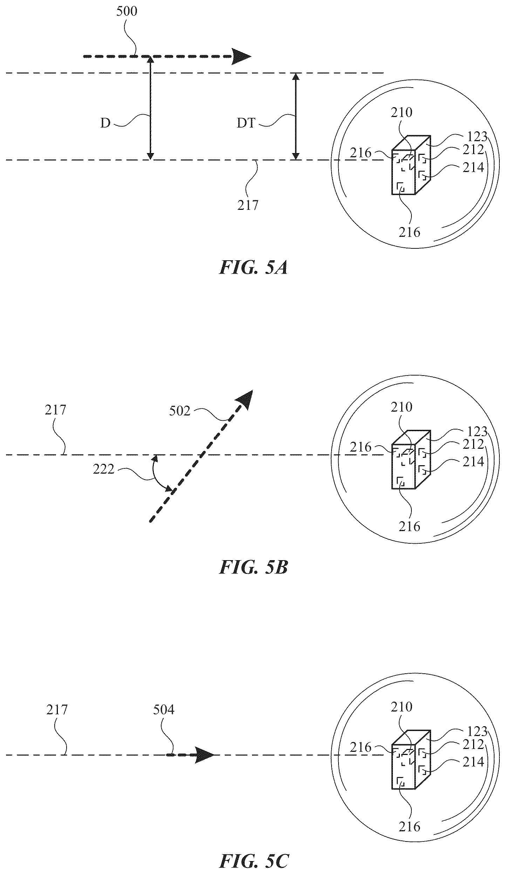

FIG. 3A illustrates an example use case in which the mobile device 106 is brought within close proximity of (e.g., within inches of, centimeters of, or contact with) the lock device 125. In this example use case, when the lock device 125 detects the mobile device 106 (or another device having an electronic key and wireless circuitry for communicating the wireless key to the lock device 125) within a first range 301 (e.g., within a first virtual bubble) of the lock device, the lock device 125 may unlock (e.g., and thereby unlock a corresponding portal, such as a door, window, lid, drawer, etc., such as by actuating the actuatable mechanism 210 of FIG. 2) irrespective of the approach angle and/or speed of the mobile device 106 (e.g., irrespective of whether the mobile device 106 approaches the lock device 125 along an approach angle 300, an approach angle 302, an approach angle 304, or an approach angle 306). In the example of FIGS. 3A, 3B, and 5A-5E, the length of an arrow indicating an approach angle or approach path may indicate the speed of the approach along that approach angle (e.g., with relatively longer arrows indicating relatively higher speeds).

However, as discussed herein, it can be inconvenient for a user (e.g., the user 101 of FIG. 1) to retrieve the mobile device 106 (e.g., from a pocket, a purse, a bag, or a backpack) and physically move the mobile device 106 into proximity of the lock device 125. Accordingly, it may be desirable to expand the range around the lock device 125 within which the electronic key information can be obtained from the mobile device 106 and within which the lock device 125 can be triggered to be unlocked. For example, the first range 301 of FIG. 3A may be defined by a radius, R1, which may be less than three inches, less than one inch, less than three centimeters, or less than one centimeter), and it may be desirable to expand the unlock range to an expanded range, such as a second range 311 shown in FIG. 3B. For example, the second range 311 of FIG. 3B may be defined by a radius, R2, greater than the radius, R1, of the first range 301. As examples, the radius R2 may be greater than three inches, greater than ten inches, greater than two feet, greater than three feet, or greater than six feet. For example, the radius R2 may be large enough to facilitate unlocking the lock device 125 (e.g., if the mobile device 106 is authorized to unlock the lock device 125) within a time period after a user carrying the mobile device enters the second range 311 and before the user carrying the mobile device 106 reaches the location of, and/or physically contacts, a portal that is controlled by the lock device 125.

Expanding the unlock range from the first range 301 to the second range 311, in this way, may allow the user 101 to simply walk up to a portal, such as the door 121 of FIG. 1, and open the door that has already been proactively unlocked by the lock device 125 when the mobile device 106 (e.g., even in the user's pocket or backpack) entered the expanded range of the lock device 125. In accordance with one or more implementations, expanding the range of the lock device 125 may be performed in a way that reduces or prevents undesirable and/or unintentional unlocking of the lock device 125.

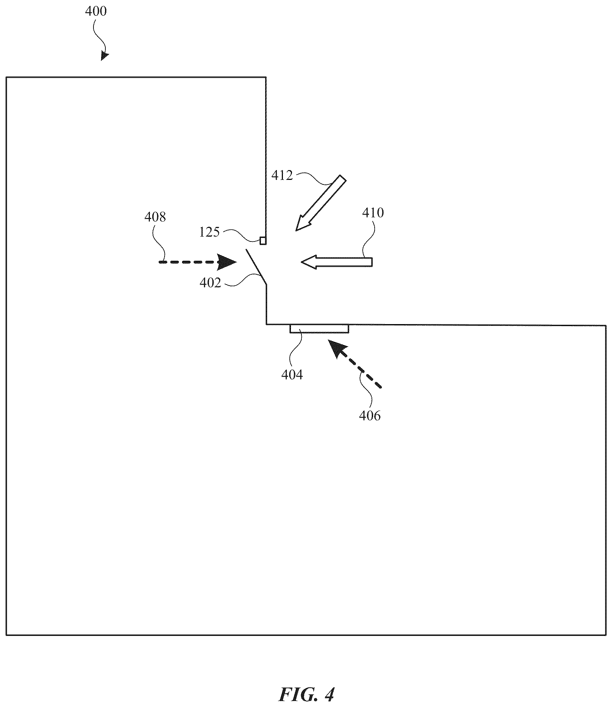

In order, for example, to avoid or prevent unintentional unlocks of the lock device 125, approach-based unlock operations may include storing, at the lock device 125, one or more unlock approach angles, and expanding the unlock range and/or unlocking the lock device 125 only when an authorized device approaches the lock device 125 along one of the stored unlock approach angles. For example, in FIG. 3B, an approach angle 320 (e.g., along the face-on approach angle 217 from the front of the lock device 125) may be defined, at the lock device 125, as an unlock approach angle that results in expanding the unlock range from the first range 301 to the second range 311. In this example, the lock device 125 may be unlocked (e.g., if the lock device 125 determines that the approaching device is authorized as and/or includes an electronic key for the lock device 125) while the approaching device is within the second range 311 and outside the first range 301. FIG. 3B also illustrates an example of an approach angle 322 (e.g., from behind the lock device 125) that is not an unlock approach angle. In this example, even an authorized device would not cause the lock device 125 to expand the unlock range or unlock the lock device 125 if approaching along the approach angle 322 and outside the first range 301. In the example of FIG. 3B, and the examples of FIGS. 4-6 below, approach angles and/or approach paths represented by solid arrows may represent unlock approach angles, and approach angles and/or approach paths represented by dashed arrows may represent non-unlock approach angles.

For example, FIG. 4 illustrates a schematic view of a top view of a structure 400 (e.g., an implementation of the structure 116 of FIG. 1 or another structure such as a storage structure) having a door 402 (e.g., an entry portal) for which access is controlled by a lock device 125. As examples, the top view of FIG. 4 may represent the ground floor of a home or an office building, or an interior office space within a larger office building. In this example, the structure 400 may include a window 404, such as a window with a view of the environment outside the structure 400 and in front of the door 402. In an example use case, a person inside the structure 400 may approach the window 404 along an approach angle 406 in order to see who is at (e.g., knocking at) the door 402.

In this example, the user approaching the window 404 along the approach angle 406 may also be approaching the lock device 125. It is appreciated that the user may consider it undesirable for the lock device 125 to unlock the door 402 due to the user approaching the window 404 from inside the structure 400 along the approach angle 406 when a person is outside the door attempting to gain access via the door 402. Accordingly, it may be desirable for the user to define the approach angle 406 as a non-unlock approach angle that does not result in expansion of an unlock range of the lock device 125 nor unlocking of the door 402. In one or more implementations, the lock device 125 may store one or more unlock approach angles, such as approach angles 410 and 412 (e.g., approach angles from outside the structure 400) as unlock approach angles (e.g., that result in expansion of an unlock range of the lock device 125 and unlocking of the door 402 if the approaching device is authorized), and any other approach angles may be non-unlock approach angles (e.g., that do not result in expansion of an unlock range of the lock device 125 nor unlocking of the door 402). As discussed in further detail hereinafter, the lock device 125 and/or another device (e.g., the mobile device 106, the wearable device 137, etc.) may provide a user interface that allows the user to identify or select unlock approach angles for each lock device 125. For example, any approach angles (e.g., including approach angle 406 and approach angle 408) that approach the lock device 125 from inside the structure 400 may not be unlock approach angles (e.g., may be non-unlock approach angles).

In the examples of FIGS. 1 and 4, a lock device 125 is provided to control access to a structure via an entry portal, and the structure is described as a building, a home, or a vehicle. However, in some implementations, the lock device 125 may be provided for a smaller structure, such as a storage structure (e.g., desk a safe, a cabinet, a locker, a wine cabinet, a gun cabinet, or the like). In these examples, the lock device 125 may control access to the storage structure via an entry port such as a lid, a door, a gate, a drawer, or any other lockable cover for an opening into the storage structure.

FIGS. 5A and 5B illustrate additional examples of approach features of approach paths that are not unlock approach paths (e.g., that are non-unlock approach paths, which may include non-unlock approach angles) for a lock device 125. In the example of FIG. 5A, an approach path 500 generally approaches the lock device 125 along an approach angle of zero degrees relative to the reference approach angle, but offset from the from face-on approach angle 217 by a distance, D. As illustrated in FIG. 5A, if the distance, D, is greater than a threshold distance DT, the approach path 500 may be determined to be a non-unlock approach path (e.g., that does not result in expansion of an unlock range of the lock device 125 nor unlocking of the lock device 125 or a portal corresponding thereto). As examples, the threshold distance, DT, may be one foot, two feet, three feet, or may be, or be based on, a width of the portal (e.g., the door) to which the lock device 125 provides access. In the example of FIG. 5B, an approach path 502 at an approach angle 222 may be a non-unlock approach path (e.g., even if the angle relative to the face-on approach angle is an unlock approach angle) if a forward projection of the approach path 502 does not intersect with the lock device 125, an associated portal, and/or the first range 301.

As discussed herein, approach features other than the approach angle may be used to determine whether an approach path of an authorized device is an unlock approach path. FIGS. 5C-5E illustrate examples of other approach features that may cause an approach path to be a non-unlock approach path. For example, in FIG. 5C, an approach path 504 approaches the lock device 125 at an approach angle of zero (or near zero) degrees relative to the reference (e.g., face-on) approach angle 217, and with a zero (or near zero) offset relative to the face-on approach angle 217. However, in the example of FIG. 5C, the approach along the approach path 504 may be at an approach speed that is less than a threshold approach speed for an unlock approach path. For example, the threshold approach speed may be a walking speed of a human (e.g., between two and four miles per hour, or greater than 1.5 miles per hour). An approach speed that is less than the threshold approach speed may indicate that the user carrying the authorized device is wandering or otherwise moving toward the lock device 125 without intending to unlock the lock device 125 or a portal controlled thereby. Accordingly, the approach path 504 may be a non-unlock approach path (e.g., that does not result in expansion of an unlock range of the lock device 125 nor unlocking of the lock device 125 or a portal corresponding thereto).

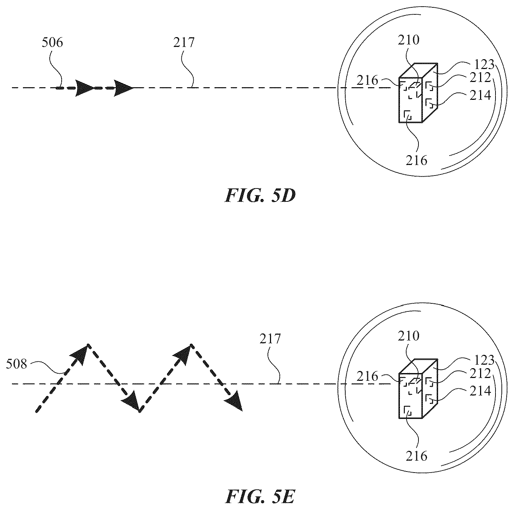

As another example of a non-unlock approach path, FIG. 5D illustrates an example of an inconsistent approach path. As illustrated, the approach path 506 may include multiple starts and stops, and/or multiple speed changes, along an approach toward the lock device 125. These starts and stops and/or speed changes may indicate that the user carrying the authorized device is wandering or otherwise moving toward the lock device 125 without intending to unlock the lock device 125 or a portal controlled thereby. Accordingly, the approach path 506 may be a non-unlock approach path (e.g., that does not result in expansion of an unlock range of the lock device 125 nor unlocking of the lock device 125 or a portal corresponding thereto). As another example of a non-unlock approach path, FIG. 5E illustrates another example of an inconsistent approach path. As illustrated, the approach path 508 may include direction changes along an approach that generally moves toward the lock device 125. These angle changes may indicate that the user carrying the authorized device is wandering or otherwise moving toward the lock device 125 without intending to unlock the lock device 125 or a portal controlled thereby. Accordingly, the approach path 508 may be a non-unlock approach path (e.g., that does not result in expansion of an unlock range of the lock device 125 nor unlocking of the lock device 125 or a portal corresponding thereto).

In one or more implementations, the approach path 506 and/or the approach path 508 may have an approach consistency that is less than a consistency threshold to qualify as an unlock approach path. For example, the consistency threshold may be a threshold that specifies that the approach speed and the approach angle of an approach path toward the lock device change less by than a respective approach speed range and approach angle range over a threshold period of time. For example, a consistency threshold may specify that, for an approach path (e.g., an approach path along an unlock approach angle) to qualify as an unlock approach path, the approach speed changes less than N (e.g., one) mile(s) per hour over a period of at least M (e.g., two) seconds, and/or the approach angle may change by less than P (e.g., five) degrees over the period of at least M seconds.

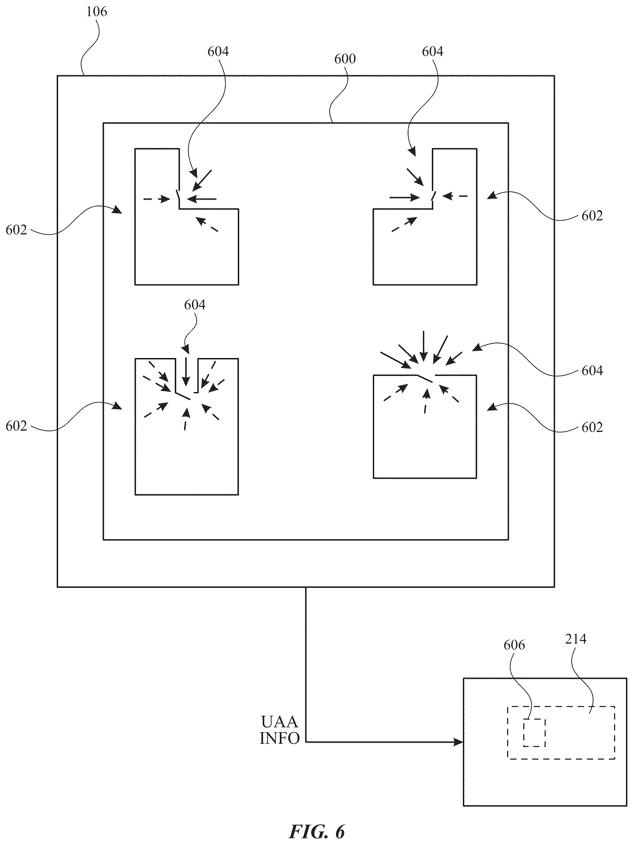

As discussed herein, in one or more implementations, a user may be provided with the ability to define one or more unlock approach angles and/or other unlock approach path features for a lock device 125. FIG. 6 illustrates one example of a user interface 600 that may be provided for defining unlock approach angles for the lock device 125. In the example of FIG. 6, the user interface 600 is provided (e.g., displayed) by the mobile device 106. In other examples, the user interface 600 may be provided by a display of another device, such as the lock device 125 or the wearable device 137 of FIG. 1.

In the example of FIG. 6, the user interface 600 includes a selectable set of entryway configurations 602. For example, a user may be prompted, by the user interface 600, to select one of the entryway configurations that most closely matches the configuration of the entryway around an entry portal their home or building at which the lock device 125 is located or is to be deployed. In this example, each entryway configuration 602 is associated with a respective set 604 of unlock approach angles. In this example, a user may identify a set of unlock approach angles by selecting one of the selectable set of entryway configurations (e.g., by tapping on the display of the mobile device 106 at the location or otherwise selecting one of the entryway configurations), and thereby selecting the corresponding set 604 of unlock approach angles. In other examples, unlock approach angles may be selected individually and/or generated and/or drawn by a user.

In the example of FIG. 6, the entryway configurations 602 may include left and right L-shaped configurations in which a wall extends perpendicularly away from an entry portal on the left or right side of the entry portal. These perpendicularly extending left and right walls may block exterior approaches to the entry portal from respective left and right sides of the entry portal, resulting in any approach angles from the walled side of the entryway being identified as non-unlock approach angles and/or preventing such approach angles from being selected as unlock approach angles. In the example of FIG. 6, the entryway configurations 602 also include a wide entryway configuration in which the entry portal is located on a flat wall with no perpendicular walls extending therefrom. In this example, the set 604 of unlock approach angles may include approach angles in a one-hundred-eighty degree range on the exterior side of the wall in which the entry portal is disposed (e.g., and all approach angles in a one-hundred-eighty degree range on the interior side of the wall in which the entry portal is disposed may be designated as non-unlock approach angles).

In the example of FIG. 6, the entryway configurations 602 also include a narrow entryway configuration in which the entry portal is at the end of a hallway with walls extending perpendicularly away from the entry portal on both sides of the entry portal. In this example, only approach angles along the face-on approach angle may approach the entry portal from the exterior of a structure, and the set 604 of unlock approach angles may include only an approach angle along the face-on approach angle from the exterior of a structure.

In the example of FIG. 6, a user identifies one or more unlock approach angles by selecting one of the selectable set of entryway configurations. However, this is merely illustrative, and other ways of receiving user identification of unlock angles are contemplated herein. As but a few examples, the user may be provided with the ability to draw a custom entryway configuration, to draw the desired unlock approach angles directly, or to directly select or unselect one or more of a set of approach angles and/or approach angle ranges presented by the user interface (e.g., without displaying an associated entryway configuration).

As illustrated by FIG. 6, once a user identification of one or more unlock approach angles has been received via the user interface 600, the mobile device 106 may provide information corresponding to the user-identified unlock approach angles (e.g., unlock approach angle (UAA) info in the figure) to the lock device 125. As shown, the UAA info may be stored in memory 214 at the lock device as a set of predetermined unlock approach angles 606 along an approaching device may trigger expansion of an unlock range and/or unlocking of the lock device 125 and/or an entry portal to which access is controlled by the lock device 125. In various implementations, the user interface 600 may also provide a user with the ability to set and/or adjust one or more approach thresholds, such as an offset threshold distance, an approach speed threshold, and/or an approach consistency threshold, in order to allow the user to adjust the sensitivity of the lock device 125 to approaches for unlocking.

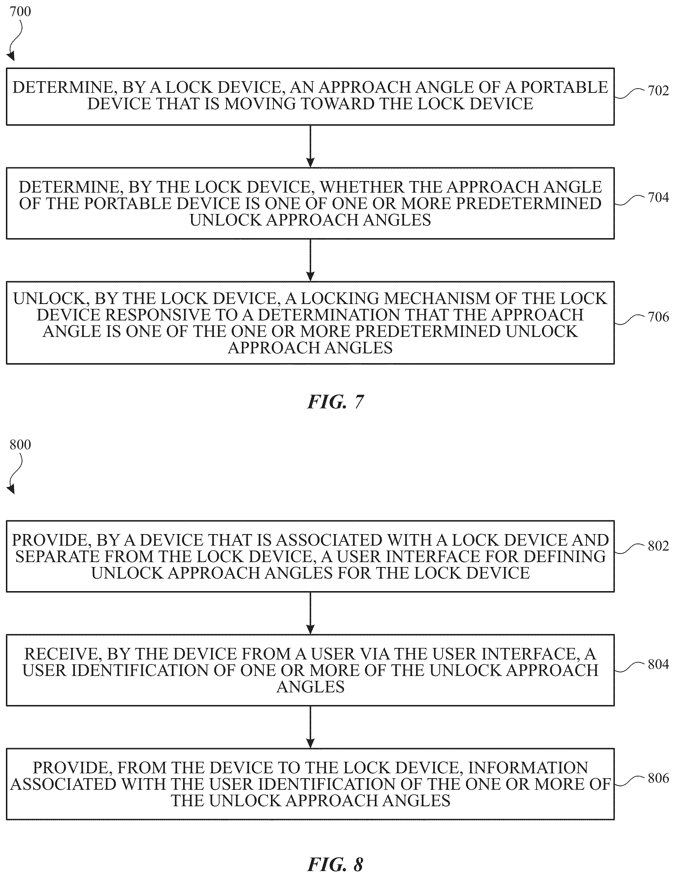

FIG. 7 illustrates a flow diagram of an example process 700 for approach-based lock control, in accordance with one or more implementations. For explanatory purposes, process 700 is primarily described herein with reference to the lock device 125 and the mobile device 106 described in connection with FIGS. 1-6. However, the process 700 is not limited to the lock device 125 and the mobile device 106 described in connection with FIGS. 1-6, and one or more blocks (or operations) of the process 700 may be performed by one or more other suitable devices. Further for explanatory purposes, the blocks of the process 700 are described herein as occurring in serial, or linearly. However, multiple blocks of the process 700 may occur in parallel. In addition, the blocks of the process 700 need not be performed in the order shown and/or one or more blocks of the process 700 need not be performed and/or can be replaced by other operations.

At block 702, a lock device (e.g., lock device 125) may determine an approach angle (e.g., relative to reference approach angle, such as a face-on approach angle 217) of a portable device that is moving toward the lock device. For example, the portable device may be implemented as, and/or may store, a wireless electronic key for the lock device.

In one or more implementations, the lock device may be a lock device for an entry portal (e.g., door 121, window 123, door 402, or another entry portal). In one or more implementations, the approach angle may be determined prior to user contact (e.g., by a user of the lock device 125 and/or a portable device, such as the mobile device 106) with the lock device or an entry portal to which access is controlled by the lock device. For example, the entry portal may include a door or a window of a building or a vehicle (e.g., structure 116 or structure 400). As another example, the entry portal may be a drawer, a door, a gate, or a lid of a storage structure (e.g., a desk, a cabinet, a safe, a locker, a wine cabinet, a gun cabinet, etc.).

At block 704, the lock device may determine whether the approach angle of the portable device is one of one or more predetermined unlock approach angles. For example, prior to determining the approach angle of the portable device, the lock device may receive one or more respective indicators of the one or more predetermined unlock angles. For example, receiving the one or more indicators may include receiving the one or more indicators from the portable device based on a user input at the portable device (e.g., as discussed herein in connection with FIG. 6).

At block 706, the lock device may unlock a locking mechanism (e.g., actuatable mechanism 210) of the lock device responsive to a determination that the approach angle is one of the one or more predetermined unlock approach angles. For example, unlocking the locking mechanism may include actuating the locking mechanism from a locked configuration to an unlocked configuration to allow access to a structure, a vehicle, or a storage structure via an entry portal to which access is controlled by configuration of the lock device.

In one or more use cases, determining the approach angle in block 702 may include determining the approach angle at a first time, and the process 700 may also include, at a second time different from (e.g., before or after, later or earlier on the same day, or on another day) the first time: determining, by the lock device (e.g., prior to another user contact by the same user or a different user with the lock device and/or the entry portal) an other approach angle of the portable device; determining, by the lock device, whether the other approach angle of the portable device is one of the one or more predetermined unlock approach angles; and refraining, by the lock device, from unlocking the locking mechanism of the lock device responsive to a determination that the other approach angle is not one of the one or more predetermined unlock approach angles (e.g., the other approach angle may be a non-unlock approach angle as discussed herein).

In one or more implementations, the process 700 may also include determining, by the lock device, an approach speed of the portable device. Unlocking the locking mechanism of the lock device may include unlocking the locking mechanism of the lock device responsive to the determination that the approach angle is one of the one or more predetermined unlock approach angles and a determination that the approach speed is within a range of approach speeds (e.g., is greater than a threshold approach speed, as discussed in connection with FIG. 5C).

In one or more implementations, the process 700 may also include determining, by the lock device, an approach consistency of the portable device. Unlocking the locking mechanism of the lock device may include unlocking the locking mechanism of the lock device responsive to the determination that the approach angle is one of the one or more predetermined unlock approach angles and a determination that the approach consistency is within a consistency range (e.g., the approach angle is within a predetermined range of angles over a predetermined period of time during the approach, as discussed in connection with the examples of FIGS. 5D and 5E).

In one or more implementations, determining the approach angle at block 702 may include determining the approach angle with a sensor of the lock device. For example, the sensor may include an ultrawide band (UWB) sensor. In one or more implementations, after the determination that the approach angle is one of the one or more predetermined unlock approach angles and before the unlocking, the lock device may perform an unlock confirmation operation using at least one other sensor of the lock device. For example, the at least one other sensor may include a camera, and the unlock confirmation operation may include detecting, using the camera, a hand of a user of the portable device reaching for an entry portal to which access is controlled by the lock device (e.g., by performing a computer-vision detection and/or tracking of the hand in a series of images captured by the camera and/or one or more other cameras).

In one or more implementations, unlocking, by the lock device, the locking mechanism of the lock device responsive to the determination that the approach angle is one of the one or more predetermined unlock approach angles may include unlocking the locking mechanism, at a first time while the portable device is: outside of a first distance range (e.g., first range 301) from the lock device, approaching the lock device along the approach angle, and within a second distance range (e.g., second range 311) from the lock device (e.g., as discussed herein in connection with FIG. 3A). The process 700 may also include unlocking the locking mechanism at a second time while the portable device is within the first distance range from the lock device irrespective of an approach angle of the portable device at the second time (e.g., as discussed herein in connection with FIG. 3A).

The process 700 is described as being performed by the lock device 125. However, in some implementations, some or all of the process 700 may be performed by another device, such as the mobile device 106 and/or the wearable device 137. For example, in some implementations, the lock device 125 may offload some or all of the processing associated with determining the approach angle, and/or determining whether the approach angle is an unlock approach angle, to the other device (e.g., for power saving at the lock device). In this example, the other device may transmit an instruction to unlock the lock device responsive to a determination, at the other device, that the other device is approaching along an unlock approach angle (e.g., and/or at an unlock approach speed, and/or with an unlock approach consistency).

FIG. 8 illustrates a flow diagram of an example process 800 for configurating a lock device for approach-based lock control, in accordance with one or more implementations. For explanatory purposes, process 800 is primarily described herein with reference to the lock device 125 and the mobile device 106 described in connection with FIGS. 1-6. However, the process 800 is not limited to the lock device 125 and the mobile device 106 described in connection with FIGS. 1-6, and one or more blocks (or operations) of the process 800 may be performed by one or more other suitable devices. Further for explanatory purposes, the blocks of the process 800 are described herein as occurring in serial, or linearly. However, multiple blocks of the process 800 may occur in parallel. In addition, the blocks of the process 800 need not be performed in the order shown and/or one or more blocks of the process 800 need not be performed and/or can be replaced by other operations.

At block 802, a device (e.g., mobile device 106, wearable device 137, or other device) that is associated with a lock device (e.g., lock device 125) and separate from the lock device, may provide (e.g., using a display of the device) a user interface (e.g., user interface 600) for defining unlock approach angles for the lock device.

At block 804, the device may receive, from a user via the user interface, a user identification of one or more of the unlock approach angles. In one or more implementation, the user identification of the one or more of the unlock approach angles may include a user selection of a subset of an available set of unlock approach angles. For example, the available set of unlock approach angles may include approach angles in a three-hundred-sixty degree range relative to a reference angle (e.g., face-on approach angle 217) for the lock device, and the subset may include only approach angles (e.g., in one or more reduced angular ranges relative to the three-hundred-sixty degree range) that approach from outside of a structure to which access is controlled by the lock device (e.g., or a further subset of the subset of the approach angles that approach from outside).

As another example, the subset of the available set of unlock approach angles may include one or more angles of approach from locations exterior to a structure that includes an entry portal (e.g., door 121, window 123, or door 402) to which access is controlled by the lock device, and a second subset of the available set of unlock approach angles may include at least one angle of approach from within the structure. For example, by unselecting or not selecting the second subset, the second subset may be prevented from being used as unlock approach angles for the lock device (e.g., may be designated as non-unlock approach angles for the lock device). For example, the structure may include at least one of a building or a vehicle. As another example, the structure may include a storage structure, such as a cabinet, a safe, a locker, a desk, or the like.

In one or more implementations, the user interface for identifying the one or more unlock approach angles for the lock device may include a selectable set of entryway configurations (e.g., entryway configurations 602), each entryway configuration associated with a respective set (e.g., a set 604) of unlock approach angles, and the user identification of the one or more of the unlock approach angles may include a user selection of one of the selectable set of entryway configurations (e.g., thereby selecting the associated respective set of unlock approach angles).

At block 806, the device may provide, to the lock device, information (e.g., UAA info as in the example of FIG. 6) associated with the user identification of the one or more of the unlock approach angles. In one or more implementations, the process 800 may also include controlling, by the device after providing the information associated with the user identification of the one or more of the unlock approach angles, the lock device to unlock the lock device based at least in part on an approach, by the device toward the lock device, along one of the one or more of the unlock approach angles. For example, controlling the lock device by the device may include providing electronic key information, and/or other authorization and/or authentication information from the device to the lock device to cause the lock device to unlock the lock device while the device is approaching the lock device along one of the identified unlock approach angles.

As illustrated by FIGS. 1-8, in one or more implementations, an apparatus (e.g., structure 116, structure 400, or another structure, such as a storage structure) may include a lock device (e.g., lock device 125) that includes an actuatable mechanism (e.g., actuatable mechanism 210) having a locked configuration that locks an entry portal (e.g., a door, a lid, a window, a drawer, a gate, etc.) for the apparatus and an unlocked configuration that unlocks the entry portal; a sensor (e.g., sensor circuitry 216); and control circuitry (e.g., processor 212) configured to: detect a portable device (e.g., mobile device 106) that includes an electronic key for the lock device; determine, prior to user contact with the entry portal, an approach angle of the portable device; determine whether the approach angle of the portable device is one of one or more predetermined unlock approach angles; and actuate the actuatable mechanism from the locked configuration to the unlocked configuration responsive to a determination that the approach angle is one of the one or more predetermined unlock approach angles. For example, the apparatus may include a building or a vehicle, and the entry portal may include a door or a window. As another example, the apparatus may include a storage structure, and the entry portal may include a door, a gate, a lid, or a drawer of the storage structure.

As described above, one aspect of the present technology is the gathering and use of data available from specific and legitimate sources for approach-based lock control. The present disclosure contemplates that in some instances, this gathered data may include personal information data that uniquely identifies or can be used to identify a specific person. Such personal information data can include audio data, voice data, demographic data, location-based data, online identifiers, telephone numbers, email addresses, home addresses, encryption information, data or records relating to a user's health or level of fitness (e.g., vital signs measurements, medication information, exercise information), date of birth, or any other personal information.

The present disclosure recognizes that the use of such personal information data, in the present technology, can be used to the benefit of users. For example, the personal information data can be used for approach-based lock control. Accordingly, use of such personal information data may facilitate authentication operations. Further, other uses for personal information data that benefit the user are also contemplated by the present disclosure. For instance, health and fitness data may be used, in accordance with the user's preferences to provide insights into their general wellness, or may be used as positive feedback to individuals using technology to pursue wellness goals.

The present disclosure contemplates that those entities responsible for the collection, analysis, disclosure, transfer, storage, or other use of such personal information data will comply with well-established privacy policies and/or privacy practices. In particular, such entities would be expected to implement and consistently apply privacy practices that are generally recognized as meeting or exceeding industry or governmental requirements for maintaining the privacy of users. Such information regarding the use of personal data should be prominently and easily accessible by users, and should be updated as the collection and/or use of data changes. Personal information from users should be collected for legitimate uses only. Further, such collection/sharing should occur only after receiving the consent of the users or other legitimate basis specified in applicable law. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations which may serve to impose a higher standard. For instance, in the US, collection of or access to certain health data may be governed by federal and/or state laws, such as the Health Insurance Portability and Accountability Act (HIPAA); whereas health data in other countries may be subject to other regulations and policies and should be handled accordingly.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of approach-based lock control, the present technology can be configured to allow users to select to "opt in" or "opt out" of participation in the collection of personal information data during registration for services or anytime thereafter. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing identifiers, controlling the amount or specificity of data stored (e.g., collecting location data at city level rather than at an address level), controlling how data is stored (e.g., aggregating data across users), and/or other methods such as differential privacy.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data.

FIG. 9 illustrates an electronic system 900 with which one or more implementations of the subject technology may be implemented. The electronic system 900 can be, and/or can be a part of, one or more of the electronic devices and/or the server shown in FIG. 1. The electronic system 900 may include various types of computer readable media and interfaces for various other types of computer readable media. The electronic system 900 includes a bus 908, one or more processing unit(s) 912, a system memory 904 (and/or buffer), a ROM 910, a permanent storage device 902, an input device interface 914, an output device interface 906, and one or more network interfaces 916, or subsets and variations thereof.

The bus 908 collectively represents all system, peripheral, and chipset buses that communicatively connect the numerous internal devices of the electronic system 900. In one or more implementations, the bus 908 communicatively connects the one or more processing unit(s) 912 with the ROM 910, the system memory 904, and the permanent storage device 902. From these various memory units, the one or more processing unit(s) 912 retrieves instructions to execute and data to process in order to execute the processes of the subject disclosure. The one or more processing unit(s) 912 can be a single processor or a multi-core processor in different implementations.

The ROM 910 stores static data and instructions that are needed by the one or more processing unit(s) 912 and other modules of the electronic system 900. The permanent storage device 902, on the other hand, may be a read-and-write memory device. The permanent storage device 902 may be a non-volatile memory unit that stores instructions and data even when the electronic system 900 is off. In one or more implementations, a mass-storage device (such as a magnetic or optical disk and its corresponding disk drive) may be used as the permanent storage device 902.

In one or more implementations, a removable storage device (such as a floppy disk, flash drive, and its corresponding disk drive) may be used as the permanent storage device 902. Like the permanent storage device 902, the system memory 904 may be a read-and-write memory device. However, unlike the permanent storage device 902, the system memory 904 may be a volatile read-and-write memory, such as random access memory. The system memory 904 may store any of the instructions and data that one or more processing unit(s) 912 may need at runtime. In one or more implementations, the processes of the subject disclosure are stored in the system memory 904, the permanent storage device 902, and/or the ROM 910. From these various memory units, the one or more processing unit(s) 912 retrieves instructions to execute and data to process in order to execute the processes of one or more implementations.

The bus 908 also connects to the input and output device interfaces 914 and 906. The input device interface 914 enables a user to communicate information and select commands to the electronic system 900. Input devices that may be used with the input device interface 914 may include, for example, microphones, alphanumeric keyboards, touchscreens, touchpads, and pointing devices (also called "cursor control devices"). The output device interface 906 may enable, for example, the display of images generated by electronic system 900. Output devices that may be used with the output device interface 906 may include, for example, speakers, printers and display devices, such as a liquid crystal display (LCD), a light emitting diode (LED) display, an organic light emitting diode (OLED) display, a flexible display, a flat panel display, a solid state display, a projector, a light source, a haptic components, or any other device for outputting information. One or more implementations may include devices that function as both input and output devices, such as a touchscreen. In these implementations, feedback provided to the user can be any form of sensory feedback, such as visual feedback, auditory feedback, or tactile feedback; and input from the user can be received in any form, including acoustic, speech, or tactile input.

Finally, as shown in FIG. 9, the bus 908 also couples the electronic system 900 to one or more networks and/or to one or more network nodes, such as the server 114 shown in FIG. 1, through the one or more network interface(s) 916. In this manner, the electronic system 900 can be a part of a network of computers (such as a LAN, a wide area network ("WAN"), or an Intranet, or a network of networks, such as the Internet. Any or all components of the electronic system 900 can be used in conjunction with the subject disclosure.

Implementations within the scope of the present disclosure can be partially or entirely realized using a tangible computer-readable storage medium (or multiple tangible computer-readable storage media of one or more types) encoding one or more instructions. The tangible computer-readable storage medium also can be non-transitory in nature.

The computer-readable storage medium can be any storage medium that can be read, written, or otherwise accessed by a general purpose or special purpose computing device, including any processing electronics and/or processing circuitry capable of executing instructions. For example, without limitation, the computer-readable medium can include any volatile semiconductor memory, such as RAM, DRAM, SRAM, T-RAM, Z-RAM, and TTRAM. The computer-readable medium also can include any non-volatile semiconductor memory, such as ROM, PROM, EPROM, EEPROM, NVRAM, flash, nvSRAM, FeRAM, FeTRAM, MRAM, PRAM, CBRAM, SONOS, RRAM, NRAM, racetrack memory, FJG, and Millipede memory.

Further, the computer-readable storage medium can include any non-semiconductor memory, such as optical disk storage, magnetic disk storage, magnetic tape, other magnetic storage devices, or any other medium capable of storing one or more instructions. In one or more implementations, the tangible computer-readable storage medium can be directly coupled to a computing device, while in other implementations, the tangible computer-readable storage medium can be indirectly coupled to a computing device, e.g., via one or more wired connections, one or more wireless connections, or any combination thereof.

Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. As recognized by those of skill in the art, details including, but not limited to, the number, structure, sequence, and organization of instructions can vary significantly without varying the underlying logic, function, processing, and output.

While the above discussion primarily refers to microprocessor or multi-core processors that execute software, one or more implementations are performed by one or more integrated circuits, such as ASICs or FPGAs. In one or more implementations, such integrated circuits execute instructions that are stored on the circuit itself.

Those of skill in the art would appreciate that the various illustrative blocks, modules, elements, components, methods, and algorithms described herein may be implemented as electronic hardware, computer software, or combinations of both. To illustrate this interchangeability of hardware and software, various illustrative blocks, modules, elements, components, methods, and algorithms have been described above generally in terms of their functionality. Whether such functionality is implemented as hardware or software depends upon the particular application and design constraints imposed on the overall system. Skilled artisans may implement the described functionality in varying ways for each particular application. Various components and blocks may be arranged differently (e.g., arranged in a different order, or partitioned in a different way) all without departing from the scope of the subject technology.

It is understood that any specific order or hierarchy of blocks in the processes disclosed is an illustration of example approaches. Based upon design preferences, it is understood that the specific order or hierarchy of blocks in the processes may be rearranged, or that all illustrated blocks be performed. Any of the blocks may be performed simultaneously. In one or more implementations, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

As used in this specification and any claims of this application, the terms "base station", "receiver", "computer", "server", "processor", and "memory" all refer to electronic or other technological devices. These terms exclude people or groups of people. For the purposes of the specification, the terms "display" or "displaying" means displaying on an electronic device.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

The predicate words "configured to", "operable to", and "programmed to" do not imply any particular tangible or intangible modification of a subject, but, rather, are intended to be used interchangeably. In one or more implementations, a processor configured to monitor and control an operation or a component may also mean the processor being programmed to monitor and control the operation or the processor being operable to monitor and control the operation. Likewise, a processor configured to execute code can be construed as a processor programmed to execute code or operable to execute code.

Phrases such as an aspect, the aspect, another aspect, some aspects, one or more aspects, an implementation, the implementation, another implementation, some implementations, one or more implementations, an embodiment, the embodiment, another embodiment, some implementations, one or more implementations, a configuration, the configuration, another configuration, some configurations, one or more configurations, the subject technology, the disclosure, the present disclosure, other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

The word "exemplary" is used herein to mean "serving as an example, instance, or illustration". Any embodiment described herein as "exemplary" or as an "example" is not necessarily to be construed as preferred or advantageous over other implementations. Furthermore, to the extent that the term "include", "have", or the like is used in the description or the claims, such term is intended to be inclusive in a manner similar to the term "comprise" as "comprise" is interpreted when employed as a transitional word in a claim.

All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. § 112(f) unless the element is expressly recited using the phrase "means for" or, in the case of a method claim, the element is recited using the phrase "step for".

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language claims, wherein reference to an element in the singular is not intended to mean "one and only one" unless specifically so stated, but rather "one or more". Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

Exemplary methods and apparatus are set out in the following items.
1. A method, comprising:
   determining, by a lock device, an approach angle of a portable device that is moving toward the lock device, wherein the portable device comprises a wireless electronic key for the lock device;
   determining, by the lock device, whether the approach angle of the portable device is one of one or more predetermined unlock approach angles; and
   unlocking, by the lock device, a locking mechanism of the lock device responsive to a determination that the approach angle is one of the one or more predetermined unlock approach angles.
2. The method of item 1, further comprising, prior to determining the approach angle of the portable device, receiving, at the lock device, one or more respective indicators of the one or more predetermined unlock angles.
3. The method of item 2, wherein receiving the one or more respective indicators comprises receiving the one or more respective indicators from the portable device based on a user input at the portable device.
4. The method of item 1, wherein determining the approach angle comprises determining the approach angle prior to user contact with the lock device or an entry portal for which access is controlled by the lock device.
5. The method of item 4, wherein the entry portal comprises a door or a window of a building or a vehicle.
6. The method of item 1, wherein determining the approach angle comprises determining the approach angle at a first time, and wherein the method further comprises, at a second time different from the first time:
   determining, by the lock device, an other approach angle of the portable device;
   determining, by the lock device, whether the other approach angle of the portable device is one of the one or more predetermined unlock approach angles; and
   refraining, by the lock device, from unlocking the locking mechanism of the lock device responsive to a determination that the other approach angle is not one of the one or more predetermined unlock approach angles.
7. The method of item 1, further comprising determining, by the lock device, an approach speed of the portable device, wherein unlocking the locking mechanism of the lock device comprises unlocking the locking mechanism of the lock device responsive to the determination that the approach angle is one of the one or more predetermined unlock approach angles and a determination that the approach speed is within a range of approach speeds.
8. The method of item 1, further comprising determining, by the lock device, an approach consistency of the portable device, wherein unlocking the locking mechanism of the lock device comprises unlocking the locking mechanism of the lock device responsive to the determination that the approach angle is one of the one or more predetermined unlock approach angles and a determination that the approach consistency is within a consistency range.
9. The method of item 1, wherein determining the approach angle comprises determining the approach angle with a sensor of the lock device.
10. The method of item 9, wherein the sensor comprises an ultrawide band (UWB) sensor.
11. The method of item 10, further comprising, after the determination that the approach angle is one of the one or more predetermined unlock approach angles and before the unlocking, performing an unlock confirmation operation using at least one other sensor of the lock device.
12. The method of item 11, wherein the at least one other sensor comprises a camera, and wherein the unlock confirmation operation comprises detecting, using the camera, a hand of a user of the portable device reaching for an entry portal to which access is controlled by the lock device.
13. The method of item 1, wherein unlocking, by the lock device, the locking mechanism of the lock device responsive to the determination that the approach angle is one of the one or more predetermined unlock approach angles comprises unlocking the locking mechanism, at a first time while the portable device is:
   outside of a first distance range from the lock device,
   approaching the lock device along the approach angle, and
   within a second distance range from the lock device, and
   wherein the method further comprises unlocking the locking mechanism, at a second time while the portable device is within the first distance range from the lock device irrespective of an approach angle of the portable device at the second time.
14. A method, comprising:
   providing, by a device that is associated with a lock device and separate from the lock device, a user interface for defining unlock approach angles for the lock device;
   receiving, by the device from a user via the user interface, a user identification of one or more of the unlock approach angles; and
   providing, from the device to the lock device, information associated with the user identification of the one or more of the unlock approach angles.
15. The method of item 14, further comprising:
   controlling, by the device after providing the information associated with the user identification of the one or more of the unlock approach angles, the lock device to unlock the lock device based at least in part on an approach, by the device toward the lock device, along one of the one or more of the unlock approach angles.
16. The method of item 14, wherein the user identification of the one or more of the unlock approach angles comprises a user selection of a subset of an available set of unlock approach angles.
17. The method of item 16, wherein the subset of the available set of unlock approach angles comprises one or more angles of approach from locations exterior to a structure comprising an entry portal to which access is controlled by the lock device, and wherein a second subset of the available set of unlock approach angles includes at least one angle of approach from within the structure.
18. The method of item 17, wherein the structure comprises at least one of a building or a vehicle.
19. The method of item 14, wherein the user interface for identifying the one or more unlock approach angles for the lock device comprises a selectable set of entryway configurations, each entryway configuration associated with a respective set of unlock approach angles, and wherein the user identification of the one or more of the unlock approach angles comprises a user selection of one of the selectable set of entryway configurations.
20. An apparatus, comprising:
   a lock device, comprising:
   an actuatable mechanism having a locked configuration that locks an entry portal for the apparatus and an unlocked configuration that unlocks the entry portal;
   a sensor; and
   control circuitry configured to:
      detect a portable device, wherein the portable device comprises an electronic key for the lock device;
      determine, prior to user contact with the entry portal, an approach angle of the portable device;
      determine whether the approach angle of the portable device is one of one or more predetermined unlock approach angles; and
      actuate the actuatable mechanism from the locked configuration to the unlocked configuration responsive to a determination that the approach angle is one of the one or more predetermined unlock approach angles.
21. The apparatus of item 20, wherein the apparatus comprises a building or a vehicle, and wherein the entry portal comprises a door or a window.
22. The apparatus of item 20, wherein the apparatus comprises a storage structure, and wherein the entry portal comprises a door, a gate, or a drawer of the storage structure.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A method, comprising:
determining, by a lock device, an approach angle of a portable device that is moving toward the lock device, wherein the portable device comprises a wireless electronic key for the lock device;
determining, by the lock device, whether the approach angle of the portable device is one of one or more predetermined unlock approach angles; and
unlocking, by the lock device, a locking mechanism of the lock device responsive to a determination that the approach angle is one of the one or more predetermined unlock approach angles.

2. The method of claim 1, further comprising, prior to determining the approach angle of the portable device, receiving, at the lock device, one or more respective indicators of the one or more predetermined unlock angles.

3. The method of claim 2, wherein receiving the one or more respective indicators comprises receiving the one or more respective indicators from the portable device based on a user input at the portable device.

4. The method of claim 1, wherein determining the approach angle comprises determining the approach angle prior to user contact with the lock device or an entry portal for which access is controlled by the lock device.

5. The method of claim 4, wherein the entry portal comprises a door or a window of a building or a vehicle.

6. The method of claim 1, wherein determining the approach angle comprises determining the approach angle at a first time, and wherein the method further comprises, at a second time different from the first time:
determining, by the lock device, an other approach angle of the portable device;
determining, by the lock device, whether the other approach angle of the portable device is one of the one or more predetermined unlock approach angles; and
refraining, by the lock device, from unlocking the locking mechanism of the lock device responsive to a determination that the other approach angle is not one of the one or more predetermined unlock approach angles.

7. The method of claim 1, further comprising determining, by the lock device, an approach speed of the portable device, wherein unlocking the locking mechanism of the lock device comprises unlocking the locking mechanism of the lock device responsive to the determination that the approach angle is one of the one or more predetermined unlock approach angles and a determination that the approach speed is within a range of approach speeds.

8. The method of claim 1, further comprising determining, by the lock device, an approach consistency of the portable device, wherein unlocking the locking mechanism of the lock device comprises unlocking the locking mechanism of the lock device responsive to the determination that the approach angle is one of the one or more predetermined unlock approach angles and a determination that the approach consistency is within a consistency range.

9. The method of claim 1, wherein determining the approach angle comprises determining the approach angle with a sensor of the lock device.

10. The method of claim 9, wherein the sensor comprises an ultrawide band (UWB) sensor.

11. The method of claim 10, further comprising, after the determination that the approach angle is one of the one or more predetermined unlock approach angles and before the unlocking, performing an unlock confirmation operation using at least one other sensor of the lock device.

12. The method of claim 11, wherein the at least one other sensor comprises a camera, and wherein the unlock confirmation operation comprises detecting, using the camera, a hand of a user of the portable device reaching for an entry portal to which access is controlled by the lock device.

13. The method of claim 1, wherein unlocking, by the lock device, the locking mechanism of the lock device responsive to the determination that the approach angle is one of the one or more predetermined unlock approach angles comprises unlocking the locking mechanism, at a first time while the portable device is:
outside of a first distance range from the lock device,
approaching the lock device along the approach angle, and
within a second distance range from the lock device, and
wherein the method further comprises unlocking the locking mechanism, at a second time while the portable device is within the first distance range from the lock device irrespective of an approach angle of the portable device at the second time.

14. The method of any of claim 1, further comprising:
providing, by the portable device, a user interface for defining unlock approach angles for the lock device;
receiving, by the portable device from a user via the user interface, a user identification of one or more of the unlock approach angles; and
providing, from the portable device to the lock device, information associated with the user identification of the one or more of the unlock approach angles as the predetermined unlock approach angles.

15. An apparatus, comprising:
a lock device, comprising:
an actuatable mechanism having a locked configuration that locks an entry portal for the apparatus and an unlocked configuration that unlocks the entry portal;
a sensor; and
control circuitry configured to perform the method of any of claims 1-14.
